# EUROPÄISCHE PATENTSCHRIFT

(11) **EP 0 916 564 B1**
(45) Veröffentlichungstag und Bekanntmachung des Hinweises auf die Patenterteilung: **13.08.2003**
(21) Anmeldenummer: 98119681.9
(22) Anmeldetag: 19.10.1998
(51) Int. Cl.: B62D 1/18

(54) **Längenveränderbare Lenkspindel für Lenkvorrichtungen bei Kraftfahrzeugen**
Column of adjustable length for motor vehicle steering systems
Colonne de longueur réglable pour directions de véhicules à moteur

(30) Priorität: 12.11.1997 DE 19750005
(43) Veröffentlichungstag der Anmeldung: 19.05.1999
(73) Patentinhaber: ETABLISSEMENT SUPERVIS, FL-9490 Vaduz (LI)
(72) Erfinder: Boersma, Josef Sape, 6712 Bludesch (AT); Müntener, Herbert, 9491 Ruggel (LI)
(74) Vertreter: Hefel, Herbert, Dipl.-Ing.

(56) Entgegenhaltungen:
- EP-A- 0 755 843
- DE-A- 3 624 473
- DE-U- 8 534 668
- US-A- 3 703 105
- US-A- 5 383 811
- US-A- 5 460 574

## Beschreibung

Die Erfindung bezieht sich auf eine längenveränderbare Lenkspindel mit den Merkmalen des Oberbegriffs des Patentanspruchs 1.

Längenveränderbare Längsspindeln, welche zwei koaxial angeordnete, von der Kreisform abweichende Profile aufweisen, sind bekannt, beispielsweise aus folgenden Druckschriften: DE-AS 2925 398; DE-OS 1530 971; GB 1542 127; GB 1328 200; US 2772 104; US 2272 900.

Vor allem aber ist hier die längenveränderbare Lenkspindel für Lenkvorrichtungen bei Kraftfahrzeugen nach der DE 3624 473 C2 zu erwähnen. Die hier vorgesehene Gleithülse, die zwischen den beiden Profilen liegt, weist sich in Längsrichtung der Gleithülse erstreckende, rippenartige Leisten auf, und zwar an der Seite, die dem relativ zu ihr axial verschiebbaren Profil unmittelbar gegenüberliegt. Diese Leisten ragen in einen zwischen den gepaarten Teilen ausgesparten, in Achsrichtung der Welle sich erstreckenden Freiraum. An dessen Wandung liegen sie unter Verformung an. Zwischen je zwei, ein Paar bildenden Leisten ist eine aus dauerelastischem Material bestehende Einlage angeordnet, in der Regel eine Gummischnur oder eine Federleiste. Durch diese vorbekannte Konstruktion wird zwar mit Erfolg das zwischen den beiden Profilen vorhandene Spiel kompensiert, doch ist die Haftreibung zwischen den gepaarten Teilen so groß, daß die für die axiale Verschiebbarkeit der Profile vorgegebenen Werte nicht verläßlich eingehalten werden können.

Eine längenveränderbare Längsspindel der eingangs genannten Art ist aus der gattungsbildenden US-PS 5,507,203 bekannt. Im umlaufenden Spaltraum zwischen einem inneren Profil und einem äußeren Profil sind zwei Gleitteile gelagert, die sich jeweils über etwa die halbe Umfangsausdehnung des Spaltraumes erstrecken.

Aufgabe der Erfindung ist es eine verbesserte Einrichtung der eingangs genannte Art bereitzustellen, bei der auch das notwendigerweise vorhandene Spiel zwischen den Profilen kompensiert wird, wobei aber trotzdem die für die axiale Verschiebbarkeit der Profile vorgegebenen Werte verläßlich und auf Dauer eingehalten werden können. Erfindungsgemäß gelingt dies durch eine längenveränderbare Längsspindel mit den Merkmalen des Anspruchs 1.

Zweckmäßigerweise ist bei einer Lenkspindel dieser Art vorgesehen, daß bei drehmomentfreier Lenkspindel die in radialer Richtung benachbart liegenden Übergangszonen zwischen Anlage am jeweiligen Profil und nachfolgendem Spiel gegeneinander winkelmäßig versetzt sind und in Umfangsrichtung gesehen der zwischen diesen beiden Übergangszonen liegende Abschnitt der Gleithülse gegenüber den benachbart liegenden Profilen jeweils ein Spiel besitzt.

Eine zweckmäßige Ausgestaltung der Erfindung wird nachfolgend anhand der Zeichnung näher beschrieben. Es zeigen:
- Fig. 1: eine Lenkspindel in Ansicht;
- Fig. 2: die Lenkspindel nach Fig. 1 im Schnitt;
- Fig. 3: einen Querschnitt durch die Lenkspindel nach den Fig. 1 und 2 nach der Schnittlinie III - III in Fig. 2, und zwar in einem gegenüber diesen Figuren erheblich vergrößertem Maßstab.

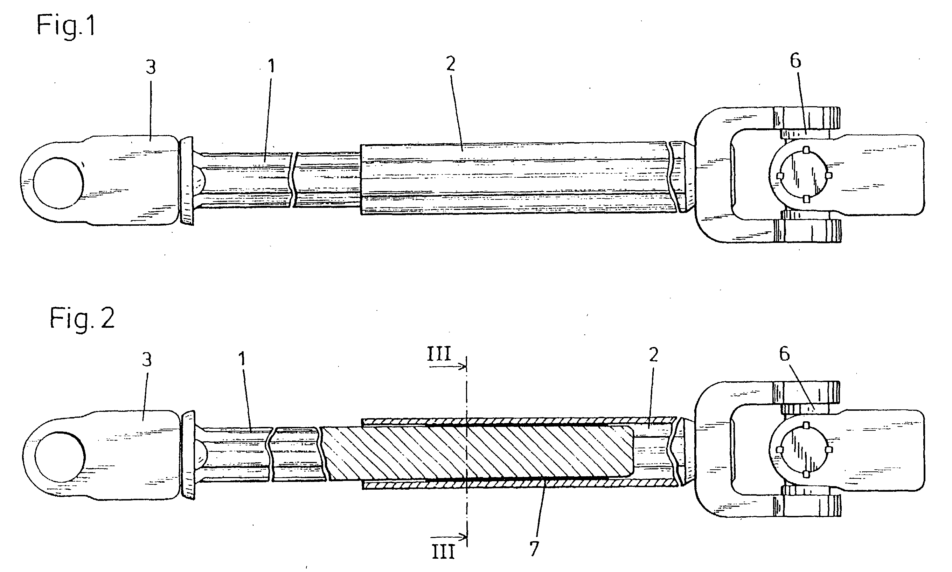

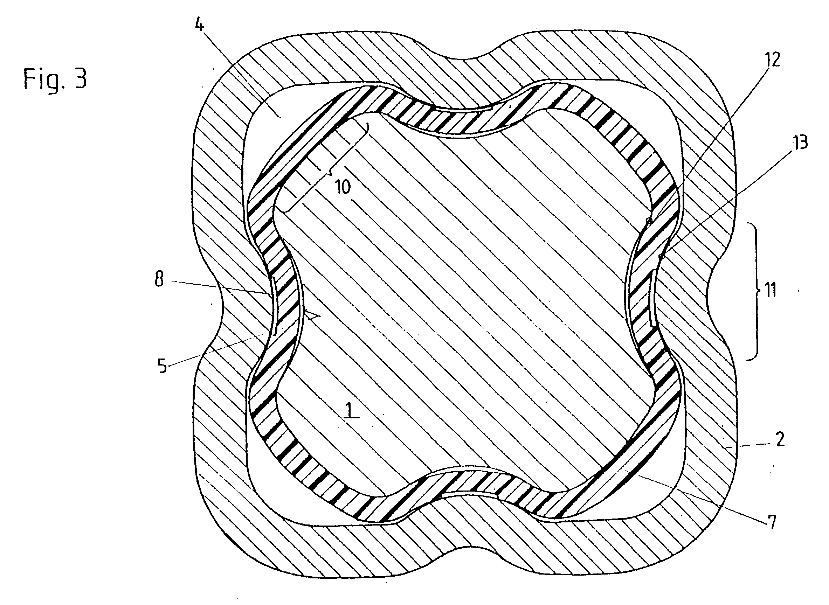

Die Lenkspindel nach den Fig. 1 bis 3 besteht aus einem ersten Profil 1 mit einem vollen Querschnitt, das an seinem einen Ende ein Formstück 3 trägt, an welchem andere, hier für die Erfindung nicht-wesentliche Teile der Lenkvorrichtung befestigt werden. Das stabartige Profil 1 ist aus vollem Material gewalzt, kaltfließgepreßt oder gezogen und sein Querschnitt ist aus Fig. 3 ersichtlich. Dieser Querschnitt zeigt abgerundete Eckbereiche, zwischen welchen eingepreßte Rillen liegen, wobei die abgerundeten Ecken und die eingepreßten Rillen stetig und bogenförmig ineinander übergehen.

Das zweite Profil 2, das an seinem Ende ebenfalls ein Gelenkstück 6 trägt, ist als Rohr ausgebildet und hinsichtlich seiner aus Fig. 3 ersichtlichen Querschnittsform in etwa korrespondierend zum ersterwähnten Profil 1 ausgestaltet, insofern als auch das Hohlprofil abgerundete Eckbereiche und dazwischen eingedrückte Rillen aufweist, die alle stetig ineinander übergehen.

Die Querschnittsformen bzw. Umfangskonturen der beiden Profile 1 und 2 sind durch jeweils aufeinanderfolgende bogenförmige Abschnitte gebildet. Die Krümmungsradien dieser bogenförmigen Abschnitte entlang der jeweiligen Umfangskontur liegen abwechselnd innerhalb und außerhalb des jeweiligen Profils 1 bzw. 2. Darüberhinaus sind die einzelnen Krümmungsradien unterschiedlich groß. Dies ist vor allem aus der Fig. 3 mit aller Deutlichkeit zu erkennen.

Die inneren Abmessungen des äußeren Profils 2 und die äußeren Abmessungen des inneren Profils 1 sind soweit voneinander unterschiedlich, daß zwischen diesen beiden Teilen ein nicht unerhebliches Spiel vorhanden ist. Dieses Spiel bildet oder begrenzt einen umlaufenden Spaltraum, der entlang seines Umfanges eine wechselnde Breite aufweist. Zur teilweisen Überbrückung dieses Spieles bzw. dieses Spaltes und zur Begünstigung der Gleitfähigkeit der Teile relativ zueinander ist am inneren Profil 1 eine aus einem geeigneten Kunststoffmaterial mit geringem Reibungskoeffizienten gefertigte Gleithülse 7 festgelegt. Diese Gleithülse entspricht hinsichtlich ihrer Umfangskontur in erheblichem Ausmaße derjenigen des sie tragenden Profils 1. Wenn die Gleithülse 7 bestimmungsgemäß montiert ist, dann weicht ihre Umfangskontur in geringem Umfang von jener Kontur ab, die sie im nicht eingebauten Zustand aufweist. Durch den Einbau wird die Gleithülse 7 etwas verformt und dadurch vorgespannt. Die Wandstärke dieser Gleithülse 7 ist über ihren Umfang im wesentlichen gleich. Über die Länge der Lenkspindel können mehrere solcher Gleithülsen 7 angeordnet sein, insbesondere zwei Gleithülsen. In diesem Falle sind diese Gleithülsen 7 voneinander distanziert.

Für diese Gleithülse 7 ist nun wesentlich, daß sie entlang der Umfangskonturen der beiden Profile 1 und 2 abwechselnd an konvexen Abschnitten 10 der äußeren Umfangskontur des inneren Profils 1 und an konvexen Abschnitten 11 der inneren Umfangskontur des äußeren Profils 2 anliegt und darüberhinaus entlang von konkaven Abschnitten des inneren Profils 1 mit Spiel und Abstand verläuft. Dadurch bilden sich sowohl am inneren Profil 1 wie auch am äußeren Profil 2 jeweils Übergangszonen 12 und 13, die jenen Tangentialbereich darstellen, in welchem die Gleithülse 7 von der Anlage am jeweiligen Profil 1 bzw. 2 in einen gegenüber diesem Profil 1 bzw. 2 spielbehafteten Verlauf übergeht. Dieses Spiel zeigt jeweils die Form eines schmalen gebogenen Keiles. Bei drehmomentfreier Lenkspindel (Fig. 3) sind die in radialer Richtung benachbart liegenden Übergangszonen 12, 13 zwischen Anlage am jeweiligen Profil 1, 2 und nachfolgendem Spiel gegeneinander winkelmäßig versetzt und in Umfangsrichtung gesehen besitzt der zwischen diesen beiden Übergangszonen 12, 13 liegende Abschnitt der Gleithülse 7 gegenüber den jeweils benachbart liegenden Profilen 1, 2 jeweils ein Spiel. Der winkelmäßige Versatz der beiden Übergangszonen 12 und 13, die einander in radialer Richtung benachbart liegen, beträgt ca. 10°. In den Bereichen, mit welchen die Gleithülse 7 an den konvexen Abschnitten der inneren Umfangskontur des äußeren Profils 2 anliegt, sind längsverlaufende Nuten 8 in der Gleithülse ausgespart, die Wandstärkenreduktionen der Gleithülse 7 darstellen.

Über die Länge der Gleithülse 7 kann die längsverlaufende Nut 8 unterschiedliche Abmessungen aufweisen. Im Längsmittelbereich der Gleithülse 7 sind die Abmessungen dieser Nut gegenüber den gegen die Stirnseiten der Gleithülse 7 verlaufenden Abschnitten dieser Nut vergrößert. Die Profile 1 und 2 bzw. deren Oberflächen besitzen Maßtoleranzen, bedingt durch die Fertigung. Dank der letzterwähnten Maßnahmen, die die erwähnte Dimensionierung der Nut 8 betreffen, werden bei der betriebsmäßigen Längenverstellung der Lenksäule dadurch nur geringe Reibungskräfte wirksam. Durch die Wandstärkenreduktion im genannten Bereich, bedingt durch diese Nutendimensionierung, wird die Gleithülse in jenem Bereich, in dem sie als Ausgleichsfeder wirkt, biegeweicher gestaltet.

Dank dieses Vorschlages sind die Berührungszonen zwischen dem inneren und dem äußeren Profil 1 und 2 und der Gleithülse 7 gegenüber den vorbekannten Maßnahmen reduziert, so daß, was die axiale Verschiebbarkeit der beiden Profile gegeneinander betrifft, günstigere Verhältnisse vorliegen. Darüberhinaus wirkt die Gleithülse 7 mit ihren jeweiligen zwischen den beiden Übergangszonen 12 und 13 liegenden Abschnitten wie eine Blattfeder, dank der die Drehbewegungen des Lenkrades mit einem gewissen Lenkwiderstand verbunden sind, der praktisch spielfrei einsetzt. Das notwendigerweise konstruktiv bedingte Spiel wird von dem die Lenkung betätigenden Fahrzeuglenker nicht mehr als solches wahrgenommen.

Im Vergleich zum Stand der Technik liegt das Wesen der Erfindung darin, daß die tangentialen Übergangszonen 12 und 13, die in radialer Richtung einander benachbart liegen, zwischen Anlage und spielbehaftetem Verlauf der Gleithülse 7 an ihrer jeweiligen Außen- und Innenseite gegeneinander winkelmäßig versetzt sind, so daß der zwischen diesen beiden benachbart zueinander liegenden Übergangszonen 12, 13 liegende Abschnitt der Gleithülse 7 im Spaltraum 4 frei verläuft und hier nach Art einer Feder wirksam werden kann, wenn auf die Lenksäule ein Drehmoment ausgeübt wird.

### Legende zu den Hinweisziffern:

- 1: erstes Profil
- 2: zweites Profil
- 3: Formstück
- 4: Spaltraum
- 5: Rillen
- 6: Gelenkstück
- 7: Gleithülse
- 8: Nut
- 9 10: konvexer Abschnitt der äußeren Umfangskontur des inneren Profils
- 11: konvexer Abschnitt der inneren Umfangskontur des äußeren Profils
- 12: Übergangszone
- 13: Übergangszone

## Patentansprüche

1. Längenveränderbare Lenkspindel für Lenkvorrichtungen bei Kraftfahrzeugen, welche mindestens zwei koaxial angeordnete, von der Kreisform abweichende Profile (1, 2) aufweist, von welchen mindestens eines als Rohrstück ausgebildet ist, in welches das andere Profil (1) mit seinem Endstück eingeschoben und in diesem axial verschiebbar gelagert ist, jedoch zur Übertragung eines Drehmomentes formschlüssig gefaßt ist, wobei die äußere Umfangskontur des inneren Profils (1) und die innere Umfangskontur des äußeren Profils (2) zumindest abschnittsweise und annähernd zueinander korrespondierend ausgebildet sind und diese umfangsgeschlossenen Konturen wenigstens zum Teil durch aufeinanderfolgende, bogenförmige Abschnitte gebildet sind, wobei die Krümmungsradien dieser bogenförmigen Abschnitte entlang der jeweiligen Umfangskontur abwechselnd innerhalb und außerhalb des jeweiligen Profils (1, 2) liegen und zwischen diesen beiden Profilen (1, 2) ein umlaufender Spaltraum (4) von gegebenenfalls entlang seines Umfangs wechselnder Breite ausgespart ist und von diesem Spaltraum (4) eine aus makromolekularem Material gefertigte Gleithülse (7) aufgenommen ist, die entlang ihrer Umfangskontur an den den Spaltraum (4) begrenzenden Wandungen der Profile (1, 2) nur abschnitts- und wechselweise anliegt, wobei die Gleithülse (7) abwechselnd an konvexen Abschnitten der äußeren Umfangskontur (10) des inneren Profils (1) und an konvexen Abschnitten der inneren Umfangskontur (11) des äußeren Profils (2) anliegt, **dadurch gekennzeichnet, daß** die Gleithülse (7) umfangsgeschlossen ausgebildet ist und daß in den Bereichen, mit welchen die Gleithülse (7) an den konvexen Abschnitten der inneren Umfangskontur des äußeren Profils (2) anliegt, längsverlaufende Nuten (8) in der Gleithülse (7) ausgespart sind, die Wandstärkenreduktionen der Gleithülse (7) darstellen.

2. Längenveränderbare Lenkspindel nach Anspruch 1, **dadurch gekennzeichnet, daß** bei drehmomentfreier Lenkspindel die in radialer Richtung benachbart liegenden Übergangszonen (12, 13) zwischen Anlage am jeweiligen Profil (1, 2) und nachfolgendem Spiel gegeneinander winkelmäßig versetzt sind und in Umfangsrichtung gesehen der zwischen diesen beiden Übergangszonen (12, 13) liegende Abschnitt der Gleithülse (7) gegenüber den benachbart liegenden Profilen (1, 2) jeweils ein Spiel besitzt.

3. Längenveränderbare Lenkspindel nach Anspruch 1 oder 2, **dadurch gekennzeichnet, daß** die Gleithülse (7) entlang ihres Umfanges im wesentlichen eine gleiche Wandstärke aufweist.

4. Längenveränderbare Lenkspindel nach Anspruch 2, **dadurch gekennzeichnet, daß** der winkelmäßige Versatz der Übergangszonen (12, 13) ca. 10 ° beträgt.

5. Längenveränderbare Lenkspindel nach Anspruch 1, **dadurch gekennzeichnet, daß** über die Länge der Lenkspindel mehrere Gleithülsen (7) angeordnet sind.

6. Längenveränderbare Lenkspindel nach Anspruch 5, **dadurch gekennzeichnet, daß** die entlang der Lenkspindel vorgesehenen Gleithülsen (7) voneinander distanziert sind.

7. Längenveränderbare Lenkspindel nach Anspruch 1, daß die Nuten (8) über ihren Längsverlauf unterschiedliche Abmessungen aufweisen.

## Claims

1. A steering spindle of variable length for steering devices in motor vehicles, which has at least two profiled members (1, 2) which are arranged coaxially and deviate from a circular shape and of which at least one is constructed in the form of a tube member into which the other profiled member (1) is inserted with its end member and is mounted so as to be axially displaceable therein but is held in a positively locking manner in order to transmit a torque, wherein the external peripheral profile of the inner profiled member (1) and the internal peripheral profile of the outer profiled member (2) are designed so as to correspond to each other at least in part and in an approximate manner and the said profiles closed on the periphery are formed at least in part by successive arcuate portions, wherein the radii of curvature of the said arcuate portions are situated alternately inside and outside the respective profiled member (1, 2) along the respective peripheral profile, and a continuous gap space (4) with a width optionally varying along its periphery is formed between the said two profiled members (1, 2), and a sliding sleeve'(7), which is produced from macromolecular material and which rests only in part and in an alternating manner along its peripheral profile against the walls of the profiled members (1, 2) bounding the gap space (4), is received by the said gap space (4), wherein the sliding sleeve (7) rests in an alternating manner against convex portions of the external peripheral profile (10) of the inner profiled member (1) and against convex portions of the internal peripheral profile, (11) of the outer profiled member (2), **characterized in that** the sliding sleeve (7) is closed on the periphery, and longitudinally extending grooves (8), which represent reductions in the wall thickness of the sliding sleeve (7), are formed in the sliding sleeve (7) in the regions in which the sliding sleeve (7) rests against the convex portions of the internal peripheral profile of the outer profiled member (2).

2. A steering spindle of variable length according to Claim 1, **characterized in that** when the steering spindle is free from torque the transition zones (12, 13) - adjacent in the radial direction - between abutment against the respective profiled member (1, 2) and subsequent clearance - are offset at an angle to one another and, as viewed in the peripheral direction, the portion of the sliding sleeve (7) situated between the said two transition zones (12, 13) has a clearance with respect to the adjacent profiled members (1, 2) in each case.

3. A steering spindle of variable length according to Claim 1 or 2, **characterized in that** the sliding sleeve (7) has substantially a uniform wall thickness along its periphery.

4. A steering spindle of variable length according to Claim 2, **characterized in that** the angle of the offset of the transition zones (12, 13) amounts to approximately 10°.

5. A steering spindle of variable length according to Claim 1, **characterized in that** a plurality of sliding sleeves (7) are arranged over the length of the steering spindle.

6. A steering spindle of variable length according to Claim 5, **characterized in that** the sliding sleeves (7) provided along the steering spindle are spaced from one another.

7. A steering spindle of variable length according to Claim 1, **characterized in that** the grooves (8) have different dimensions over their longitudinal extension.

## Revendications

1. Arbre de direction modifiable en longueur pour dispositifs de direction dans des véhicules automobiles, qui présente au moins deux profilés (1, 2) agencés co-axialement et s'écartant de la forme circulaire, dont au moins l'un se présente sous la forme d'une pièce tubulaire, dans laquelle l'autre profilé (1) est inséré par sa pièce d'extrémité et est monté dans celle-ci de façon à pouvoir coulisser axialement, mais est ménagé avec adaptation de formes pour le transfert d'un couple de torsion, où le contour périphérique externe du profilé interne (1) et le contour périphérique interne du profilé externe (2) se présentent au moins en sections et approximativement en correspondance l'un avec l'autre et ces contours périphériquement fermés sont formés au moins en partie par des sections arquées successives, où les rayons de courbure de ces sections arquées se trouvent le long du contour périphérique respectif en alternance à l'intérieur et à l'extérieur du profilé respectif (1, 2) et, entre ces deux profilés (1, 2), est ménagé un espace creux périphérique (4) de largeur variant éventuellement le long de sa périphérie et recevant une douille coulissante (7) fabriquée dans un matériau macromoléculaire, qui s'appuie par sections et de manière variable, le long de sa périphérie, sur les parois des profilés (1, 2) délimitant l'espace creux (4), où la douille coulissante (7) s'applique en alternance sur des sections convexes du contour périphérique externe (10) du profilé interne (1) et sur des sections convexes du contour périphérique interne (11) du profilé externe (2), **caractérisé en ce que** la douille coulissante (7) se présente périphériquement fermée et **en ce que**, dans les zones, par lesquelles la douille coulissante (7) s'appuie sur les sections convexes du contour périphérique interne, sont ménagées dans la douille coulissante (7) des rainures (8) s'étendant longitudinalement, qui représentent des réductions d'épaisseur de paroi de la douille coulissante (7).

2. Arbre de direction modifiable en longueur selon la revendication 1, **caractérisé en ce que**, lorsque l'arbre de direction est exempt de couple de torsion, les zones de transition (12, 13) se trouvant au voisinage dans la direction radiale sont décalées en faisant un angle mutuel entre l'appui sur le profilé respectif (1, 2) et le jeu suivant et **en ce que**, en observant dans la direction périphérique, la section de la douille coulissante (7) se trouvant entre ces deux zones de transition (12, 13) possède respectivement un jeu par rapport aux profilés (1, 2) disposés au voisinage.

3. Arbre de direction modifiable en longueur selon la revendication 1 ou 2, **caractérisé en ce que** la douille coulissante (7) présente sensiblement une épaisseur de paroi égale le long de sa périphérie.

4. Arbre de direction modifiable en longueur selon la revendication 2, **caractérisé en ce que** le décalage angulaire des zones de transition (12, 13) est d'environ 10°.

5. Arbre de direction modifiable en longueur selon la revendication 1, **caractérisé en ce que** plusieurs douilles coulissantes (7) sont aménagées sur la longueur de l'arbre de direction.

6. Arbre de direction modifiable en longueur selon la revendication 5, **caractérisé en ce que** les douilles coulissantes prévues le long de l'arbre de direction sont distancées l'une de l'autre.

7. Arbre de direction modifiable en longueur selon la revendication 1, **caractérisé en ce que** les rainures (8) présentent des dimensions différentes sur leur longueur.
